# EUROPÄISCHE PATENTSCHRIFT

(11) **EP 1 507 672 B1**
(45) Veröffentlichungstag und Bekanntmachung des Hinweises auf die Patenterteilung: **09.11.2005**
(21) Anmeldenummer: 03732480.3
(22) Anmeldetag: 27.05.2003
(51) Int. Cl.: B60H 1/00

(54) **ANORDNUNG ZUM KLIMATISIEREN EINES FAHRZEUGS**
DEVICE FOR AIR-CONDITIONING A VEHICLE
SYSTEME DE CLIMATISATION DE VEHICULE

(30) Priorität: 28.05.2002 DE 10223712
(43) Veröffentlichungstag der Anmeldung: 23.02.2005
(73) Patentinhaber: Thermo King Deutschland GmbH, 68766 Hockenheim (DE)
(72) Erfinder: HASSEL, Karl-Heinz, 76684 Östringen (DE); SCHOEN, Siegbert, 75031 Eppingen (DE)
(74) Vertreter: Schirdewahn, Jürgen
(86) Internationale Anmeldenummer: PCT/EP2003/005570
(87) Internationale Veröffentlichungsnummer: WO 2003/099594

(56) Entgegenhaltungen:
- EP-A- 0 982 163
- DE-A- 19 505 403
- DE-A- 19 641 636
- US-A- 4 679 616

## Beschreibung

Die Erfindung bezieht sich auf eine Anordnung zum Klimatisieren eines Fahrzeugs mit den Merkmalen des Oberbegriffs von Anspruch 1.

Eine solche Anordnung ist beispielsweise aus der DE 195 05 403 A1 bekannt. DE 44 32 277 offenbart ferner eine derartige Anordnung für eine überkritische Betriebsweise. Die DE 44 32 272 C2 bildet dabei die EP 0 424 474 B1 für die Verhältnisse einer Klimatisierung eines Fahrzeugs weiter. In der letztgenannten EP 0 424 472 B1 sind dabei die Verhältnisse einer unterkritischen Betriebsweise mit denen einer überkritischen Betriebsweise verglichen, wobei sich ergibt, daß die Merkmale des Oberbegriffs von Anspruch 1 auch auf eine Anordnung zum Klimatisieren eines Fahrzeugs in unterkritischer Betriebsweise zutreffen.

Die erfindungsgemäße Anordnung ist besonders auf die Bedürfnisse von schienengebundenen und schienenungebundenen Nutzfahrzeugen abgestellt, wobei ein besonderer Schwerpunkt die Klimatisierung von Omnibussen ist. Die Erfindung hat aber auch allgemeine Bedeutung für sonstige Fahrzeuge einschließlich Personenkraftwagen.

Bei Personenkraftwagen steht von vornherein für eine Klimatisierungsanordnung selbst bei konstruktiver Einplanung nur wenig Raum zur Verfügung. Das gilt in ähnlicher Weise aber auch für Nutzfahrzeuge wie Omnibusse, bei denen beispielsweise eine Klimatisierungseinheit in einem Dachaufbau angeordnet wird (vgl. z.B. US-A-4 201 064). Im letztgenannten Fall ist es bereits bekannt, zwei baugleiche Wärmetauscher räumlich mit nebeneinanderliegenden Achsen und schaltungsmäßig in paralleler Betriebsweise anzuordnen. Für unterschiedliche Typen von Omnibussen müssen dabei aber die eingesetzten Wärmetauscher typangepaßt jeweils individuell gefertigt werden. Das bedeutet einen erheblichen Herstellungsaufwand und erschwert die Lagerhaltung für die Fertigung und für Ersatzteile. Dies ist besonders kritisch bei Nutzfahrzeugen, bei denen jeweils nur eine relativ kleine Anzahl eines bestimmten Bautyps gefertigt wird. Aber auch bei der Massenherstellung für PKW's stellen sich bei der jetzt üblichen harten Kostenkalkulation ähnliche Probleme.

In der letzten Zeit ist man bei Klimatisierungseinrichtungen für Personenkraftwagen dazu übergegangen, für die hochdruckseitige Wärmetauschereinrichtung Flachrohrwärmetauscher wegen deren besonders günstigen spezifischen Leistungsgewichtes einzusetzen (vgl. z.B. EP-A2-0 219 974). Derartige Flachrohrwärmetauscher werden jetzt üblicherweise aus Aluminium oder einer Aluminiumlegierung gefertigt und miteinander hartverlötet. Bei größeren Nutzfahrzeugen, insbesondere Omnibussen, hat die Fertigung einer hochdruckseitigen Wärmetauscheinrichtung im Klimatisierungskreislauf in Flachrohrbauweise bisher praktisch noch keinen Eingang gefunden. Das gilt auch dann, wenn eine Klimatisierungseinheit in einem Dachaufbau geborgen ist. Der Grund liegt darin, daß die Herstellung von Wärmetauschern hoher Leistung, wie sie beispielsweise bei Omnibussen gefordert ist, in Flachrohrbauweise Schwierigkeiten macht, die auch mit dem Hartverlötungsprozeß relativ großer Wärmetauscher zusammenhängen, so daß die mit diesen Herstellungsschwierigkeiten verbundenen relativ großen Herstellungskosten sich bei den relativ geringen Stückzahlen nicht rechnen.

Der Erfindung liegt allgemein die Aufgabe zugrunde, eine Anordnung zum Klimatisieren eines Fahrzeugs mit den Merkmalen des Oberbegriffs von Anspruch 1 weiter zu rationalisieren, wobei zunächst besonderes Augenmerk auf die hochdruckseitige Wärmetauschereinrichtung gelegt wird. Bei dieser handelt es sich bei einem unterkritischen Betrieb um eine Verflüssigereinrichtung und bei einem überkritischen Betrieb um einen Gaskühler (vgl. Ansprüche 7 und 5).

Diese Aufgabe wird durch die Merkmale von Anspruch 1 gelöst.

Die Erfindung verkörpert dabei die Verknüpfung von zwei jeweils für sich aus dem genannten Stand der Technik nicht nahegelegten Prinzipien.

Zum einen wird davon abgegangen, die Dimensionierung der hochdruckseitigen Wärmetauscher in Abhängigkeit vom Fahrzeugtyp vorzunehmen. Es wird vielmehr das Hauptargument auf eine Vereinfachung von Herstellung, Lagerhaltung und Bereitstellung solcher Wärmetauscher gelegt.

Im Idealfall wird dabei sogar nur noch ein einziger Bautyp eines Wärmetauschermoduls eingesetzt, der mindestens in Richtung Nennleistung und Druckverlust und vorzugsweise auch hinsichtlich Aufbau und Dimensionierung aller Komponenten auf eine Bauform normiert ist. Bei höherem Bedarf an Nennleistung erfolgt dann je nach den Anforderungen eine baukastenmäßige Zusammensetzung aus derartigen einheitlich normierten Modulen. Der Erfindungsgedanke ist geometrisch besonders anschaulich dann, wenn mindestens zwei derartige Module miteinander verschaltet werden. Aber selbst wenn nur ein einziges derartiges Modul eingesetzt wird, ist der Erfindungsgedanke bereits erfüllt, wenn dieses Modell aus dem genannten Baukastensatz stammt, der auch zum Aufbau von Wärmetauschern beispielsweise doppelter Nennleistung durch Verschaltung von zwei Modulen Anwendung finden kann. Dies ist nicht zu verwechseln mit der altbekannten Konstruktionsweise, gegebenenfalls nur einen einzigen Wärmetauscher einzusetzen, diesen jedoch aber bedarfsweise für jeden Bautyp eines Fahrzeugs neu zu dimensionieren und zu gestalten.

Zum anderen setzt die Erfindung eine neuartige Verknüpfung von derartigen Modulen für den Fall ein, daß die hochdruckseitige Wärmetauschereinrichtung aus mindestens zwei derartigen Modulen zusammengesetzt ist. Zur Definition dieser neuartigen Verknüpfungsweise wird davon ausgegangen, daß im Einklang mit der schon genannten EP-A2-0 219 974 einem üblichen Wärmetauscher in Flachrohrbauweise eine Längserstreckungsrichtung zugeordnet werden kann, welcher durch mindestens ein Sammelrohr an der einen Endseite der Flachrohre bestimmt ist, die alle mit diesem Sammelrohr kommunizieren. In dem genannten parallelen Fall sind sogar zwei Sammelrohre oder allgemein Sammler an beiden Enden der Flachrohre angeordnet.

Nach dem zweiten Grundprinzip der Erfindung ist vorgesehen., daß bei einer Leistungsanforderung über die Leistung hinaus, welche schon ein Modul zur Verfügung stellt, mindestens zwei Module in der durch die Sammler bestimmten Längsrichtung hintereinander geometrisch angeordnet werden, dabei aber jeder von diesen Modulen für sich bei dieser geometrischen Hintereinanderanordnung im Kreislauf von dem inneren Wärmetauschfluid parallel beaufschlagt werden. Bei Verwendung mehrerer Module wird dabei die Leistung vervielfacht, ohne daß der Druckabfall an der aus mehreren Modulen in dieser Weise zusammengesetzten Wärmetauschereinrichtung nennenswert verändert wird und ohne daß die Leistungsanforderung an das einzelne Modul verändert wird. Dieses erfindungsgemäße Prinzip ist in keiner Weise mit der Anordnung der US-A-4 201 064 vergleichbar, wo die beiden gleichartigen Wärmetauscher nicht geometrisch hintereinander, sondern geometrisch nebeneinander angeordnet sind. Bei dieser bekannten Anordnung würde die konsequente Anwendung der Erfindung bedeuten, beide Wärmetauscher jeweils für sich in geometrisch hintereinander angeordnete Module zu zerlegen, die aber weiterhin jeder für sich vom inneren Wärmetauschfluid parallel beaufschlagt bleiben. Diese Module bleiben dabei raummäßig klein und noch relativ einfach herstellbar.

Es ist an sich bekannt (DE 38 43 305 A1), bei einem Verflüssiger für ein Kältemittel einer Fahrzeugklimaanlage, bei der das Kältemittel das innere Wärmetauschfluid darstellt, in Flachrohrbauweise mehrere parallel vom Kältemittel beaufschlagte Wärmetauscherschlangen in einer Baueinheit zusammen zu fassen, bei der die Verrippung allen Schlangen gemeinsam ist. Abgesehen davon, daß die vom Fahrzeugtyp unabhängige Bautypennormierung der erfindungsgemäßen Anordnung nicht vorgesehen ist, handelt es sich nicht, wie bei der Erfindung, um eine geometrische Hintereinanderanordnung von einzelnen Modulen, die wegen des Normierungsgedankens jeweils nur dem betreffenden Modul zugehörige gesonderte Verrippungen haben.

Die Weiterbildung gemäß Anspruch 2 spezialisiert die geometrische Hintereinanderordnung von mindestens zwei Modulen auf eine solche, bei der diese Hintereinanderordnung sogar mit axialer Fluchtung der Sammlereinrichtungen vorgesehen ist.

Vorzugsweise ist die Richtung der geometrischen Hintereinanderordnung auch mehr oder minder mit der Längsrichtung des Fahrzeugs gemeinsam.

Anderseits kann man aber auch einen Winkel zwischen den Längserstreckungsrichtungen der mindestens zwei Module vorsehen. Das gilt insbesondere dann, wenn die geometrische Längserstreckungsrichtung innerhalb der Wärmetauschereinrichtung quer zum Fahrzeug ausgerichtet ist.

Wie erwähnt ist bei überkritischer Auslegung des Kreislaufs die Wärmetauschereinrichtung üblicherweise ein Gaskühler; dann ist zweckmäßig eine Sammlereinrichtung in der Niederdruckseite des Kreislaufs einbezogen, was an sich aus der schon zur Bildung des Oberbegriffs von Anspruch 1 herangezogenen DE 44 32 272 C2 an sich bekannt ist (vgl. insbesondere deren Fig. 3 mit Beschreibung).

Wenn dann bei unterkritischer Auslegung des Kreislaufs die Wärmetauschereinrichtung in ebenfalls schon angesprochener Weise eine Verflüssigereinrichtung ist, ist vorzugsweise vorgesehen, daß eine Sammlereinrichtung in der Hochdruckseite und/oder der Niederdruckseite des Kreislaufseinbezogen ist.

Im Idealfall ist die Erfindung dann verkörpert, wenn alle in Frage kommenden hochdruckseitigen Wärmetauschereinrichtungen aus der gleichen Modulbauart aufgebaut werden können, sei es unter Einsatz nur eines Moduls, sei es unter der geschilderten Vereinigung mehrerer Module.

Es ist aber nicht ausgeschlossen, daß auch noch andersartig ausgelegte Bauarten von Modulen mit verwendet werden.

Ein Sonderfall hiervon besteht darin, daß mindestens ein weiteres Modul für eine Spezialfunktion anders als die sonstigen Module gestaltet ist. Das gilt beispielsweise dann, wenn in einem zusätzlichen Weg des Kreislaufs eine Gegenstromwärmetauscheinrichtung zwischen dem hochdruckseitigen und dem niederdruckseitigen inneren Wärmetauschfluid vorgesehen ist, was an sich bekannt ist (wiederum DE 44 32 272 C2, Fig. 3 mit Beschreibung). Da in einem solchen Fall beide Wärmetauschflächen des Sammlers von dem inneren Wärmetauschfluid beaufschlagt werden, erübrigt sich in einem solchen Wärmetauschermodul eine äußere Verrippung.

Es ist aber nicht ausgeschlossen, daß auch Module mit äußerer Verrippung in einem zusätzlichen Kreislauf oder einem zusätzlichen Weg eingesetzt werden und dabei in die normierte Bauart gemäß der Erfindung mit einbezogen sind (vgl. Anspruch 30).

Ferner ist nicht ausgeschlossen, daß die Wärmetauschereinrichtung mindestens zwei Sätze von jeweils in beliebiger Anzahl jeweils gleich in Nennleistung und Druckverlust untereinander bauartgleichen Modulen aufweist, wobei in verschiedenen Sätzen mindestens die Nennleistung unterschiedlich ist. Es kann dabei dem Fachmann überlassen bleiben, ob dabei die Gestaltung derartiger Module allein aus numerischen Gesichtspunkten wie Halbierung oder Verdoppelung der Leistung abgeleitet wird oder sich nach spezielleren Anforderungen der zu bedienenden Bautypen von Fahrzeugen richtet.

Bei der unterschiedlichen Leistungsanforderung an hochdruckseitige Wärmetauschereinrichtungen für unterschiedliche Fahrzeugtypen kommt der durch die Erfindung erreichbare Vorteil schon dann voll zur Geltung, wenn er sich allein bei der Herstellung von hochdruckseitigen Wärmetauschern unterschiedlicher Leistung auswirkt. Diese können nämlich dann bei der Herstellung baukastenmäßig aus den mindestens leistungsmäßig genormten Modulen aufgebaut werden. Aus diesen kann dann, gegebenenfalls mit anderen Teilen, ein Wärmetauscher jeweils gewünschter Leistung aufgebaut werden, bei dem dann die Module dauerhaft integriert sind (vgl. Anspruch 10). In diese dauerhafte Integration kann man dann auch noch andere Teile mit einbeziehen, wie etwa eine Anschlußverzweigung (vgl. Ansprüche 12 bis 16). Bei entsprechender konstruktiver Vorbereitung kann man aber auch geometrisch hintereinander und schaltungsmäßig parallel angeordnete Module lösbar in der hochdruckseitigen Wärmetauscheinrichtung anordnen, etwa wenn dies aus den Gesichtspunkten leichterer Wartung bzw. leichterer Reparatur erwünscht ist. Diese lösbare Anordnung schließt nicht aus, die genannten weiteren Teile dann auch wahlweise lösbar oder dauerhaft integriert in der betreffenden hochdruckseitigen Wärmetauscheinrichtung anzuordnen.

Bei Flachrohrwärmetauschern verlaufen die verrippten Flachrohre konventionell geradlinig zwischen zwei parallel zueinander verlaufenden Sammeleinrichtungen, beispielsweise zwei Sammelrohren (vgl. z.B. erneut EP 0 219 974 A2). Im Rahmen der Erfindung wird die achsparallele Anordnung von Sammlereinrichtungen zweckmäßig beibehalten, dem Verlauf der Flachrohre zwischen den beiden Sammlereinrichtungen jedoch eine Krümmung verliehen (vgl. Ansprüche 17 bis 19). Hierdurch wird mindestens ein Freiraum für den Einbau mindestens eines weiteren Elementes gewonnen, beispielsweise eines Axiallüfters, wenn dies erfindungsgemäß der Anordnung in einem Dachaufbau des Fahrzeugs bereitgestellt wird. Derartige Dachaufbauten sind beispielsweise bei Omnibussen oder größeren Nutzfahrzeugen üblich, vgl. die schon erwähnte US-PS 4 201 064 oder auch die DE 32 24 895 C2 und die DE 34 06 249 C2.

Bei den letztgenannten bekannten Dachaufsätzen sind jeweils baugleiche Verdampfer in Betracht gezogen, welche zu beiden Seiten des Dachaufsatzes angeordnet sind und beispielsweise bei einem Omnibus solche Luft klimatisieren, die an den beiden seitlichen Fensterfronten des Omnibusses in den Fahrgastraum eingeleitet wird. Man kann im Rahmen der erfindungsgemäßen Anordnung aber auch dieselbe hochdruckseitige Wärmetauscheinrichtung mit verschiedenen Verdampfern zur Klimatisierung unterschiedlicher Klimatisierungszonen des Fahrzeugs verwenden (vgl. Anspruch 21).

Eine im Rahmen der Erfindung besonders bevorzugte Konstruktionsweise - für die auch selbständiger Schutz beansprucht wird - besteht dann darin, mindestens einen Verdampfer der Verdampfereinrichtung analog zu den Modulen der hochdruckseitigen Wärmetauscheinrichtung aus mindestens zwei Verdampfermodulen zusammen zu setzen, welche unter Bezug auf ihre Sammeleinrichtung geometrisch hintereinander angeordnet werden, jedoch untereinander parallel vom inneren Wärmetauschfluid beaufschlagt werden.

Diese modulare Aufbauweise der Verdampfer kann man im Grenzfall für die ganze Verdampfereinrichtung vorsehen. Sie bietet aber auch bereits dann deutliche Vorteile, wenn nur ein Verdampfer für eine bestimmte Klimazone derart modular aufgebaut wird, der besonders hohe Leistungsanforderungen hat und bei dem bei unterschiedlichen Fahrzeugtypen die Leistungsanforderungen sehr unterschiedlich sind. Das kann beispielsweise für die Klimatisierung eines Fahrgastraumes oder eines größeren Nutzraumes der Fall sein, während man mit einem einzigen Bautyp eines Verdampfers für den Fahrerplatz auskommen kann (vgl. Ansprüche 22 und 23). Für den Fall, daß nur ein einziger Verdampfer für die Klimatisierung des Fahrerplatzes benötigt wird, ist dabei vorzugsweise vorgesehen, auch diesen einzigen Verdampfer aus dem Baukasten von Verdampfermodulen einzusetzen, die sonst für den Zusammenbau Leistungsstärkerer Verdampfer eingesetzt werden.

Die Verdampfermodule sind ebenso wie die Module der hochdruckseitigen Wärmetauschereinrichtung jeweils für sich zum Wärmetausch mit dem äußeren Wärmetauschfluid, im allgemeinen der Umgebungsluft, verrippt. Man kommt jedoch in der Praxis mit einer Bauweise aus, bei der die verrippten Rohre Rundrohre oder allenfalls ovale Rohre sind, da Flachrohre nur im relativ seltenen Einzelfall für die Verdampfer weitere Vorteile bieten.

Eine Verdampfereinrichtung ist funktionell mit der Expansionseinrichtung der erfindungsgemäßen Anordnung verknüpft. Die Ansprüche 26 bis 28 geben verschiedene Möglichkeiten an, diese Verknüpfung auch in Bezug auf die Verdampfermodule zu realisieren.

Unabhängig davon, ob die erfindungsgemäße Anordnung Module der hochdruckseitigen Wärmetauschereinrichtung und/oder Verdampfermodule enthält, wird die erfindungsgemäße Anordnung zweckmäßig gemäß den Ansprüchen 29 bzw. 30 ausgelegt.

Nach Anspruch 29 kann ein bestimmtes Modul der hochdruckseitigen Wärmetauschereinrichtung oder auch ein Verdampfermodul aus dem Baukasten solcher Module auch für einen Sonderzweck eingesetzt werden, nämlich beispielsweise innerhalb eines zusätzlichen Kreislaufes oder aber auch nur eines zusätzlichen Weges desselben Kreislaufs.

Andererseits erhält man eine Rationalisierung des Aufbaus der ganzen Anordnung im Sinne von Anspruch 30 dann, wenn von verschiedenen Quellen herangeführte Luft als äußeres Wärmetauschfluid mit derselben hochdruckseitigen Wärmetauscheinrichtung in Wärmetausch tritt.

Die Erfindung wird im folgenden anhand schematischer Zeichnungen an mehreren Ausführungsbeispielen noch näher erläutert. Es zeigen:
Figur 1 eine Basisschaltung einer Anordnung zum Klimatisieren eines Fahrzeugs;
Figur 2 und Figur 3 zwei ergänzte Varianten von Figur 1;
Figur 4a bis 7a Seitenansichten sowie
Figur 4b bis 7b Stirnansichten eines modularen Aufbaus einer Hochdruckseitigen Wärmetauschereinrichtung, wie sie bei den Figuren 1 bis 3 Anwendung finden kann;
Figur 8 eine perspektivische Ansicht einer abgewandelten Anschlußweise von Modulen der hochdruckseitigen Wärmetauschereinrichtung;
Figur 9 und Figur 10 zwei weitere Anordnungsvarianten von Figur 1, wobei Figur 10 eine erste Möglichkeit der Anordnung von mehreren Verdampfermodulen zeigt;
Figur 11 in Seitenansicht eine prinzipielle Darstellung der geometrischen Anordnung und Verschaltung von zwei Verdampfermodulen;
Figur 12 eine weitere Variante von Figur 1 mit Einbeziehung von zwei Verdampfermodulen sowie
Figur 13 eine seitliche Schnittdarstellung eines die erfindungsgemäße Anordnung enthaltenden Dachaufsatzes auf einem Fahrzeug, insbesondere Omnibusse oder großem Nutzfahrzeug.

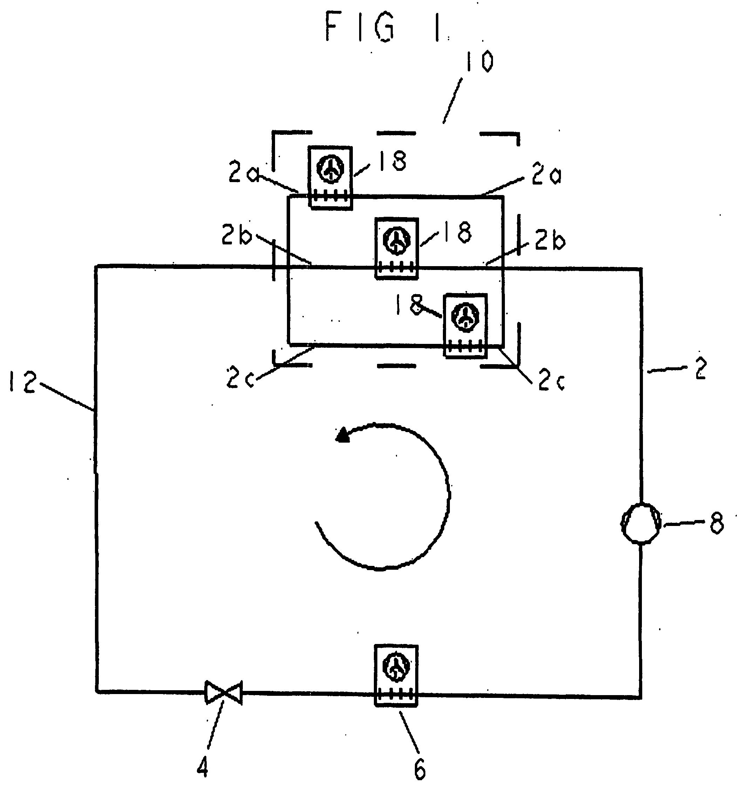

Figur 1 zeigt einen geschlossenen Kreislauf eines inneren Wärmetauschfluids zum Klimatisieren eines Fahrzeugs, insbesondere eines Omnibusses oder größeren Nutzfahrzeuges.

Es gibt zwei typische Betriebsweisen eines solchen Kreislaufs, nämlich einen unterkritischen Betrieb und einen überkritischen Betrieb. Die unterkritische Betriebsweise ist die bisher konventionelle, bei der als inneres Wärmetauschfluid früher FCKW, jetzt weniger umweltgefährliche Kältemittel, wie beispielsweise R134a, eingesetzt werden. Bei der unterkritischen Betriebsweise erfolgt auf der Hochdruckseite ein Phasenwechsel. Neuerdings zieht man als inneres Wärmetauschfluid beispielsweise CO₂ in Betracht, welches geringere Umweltrisiken mit sich bringt. Hierbei kommt es auf der Hochdruckseite zu sehr hohen Drucken, ohne daß es dabei auf der Hochdruckseite zu einem Phasenwechsel kommt.

Unabhängig davon, ob es sich um eine unterkritische oder eine überkritische Betriebsweise handelt, enthält der Kreislauf basismäßig folgende Komponenten: eine Expansionseinrichtung 4, eine entsprechend dem Kreislaufsymbol nachfolgende Verdampfereinrichtung 6, eine Verdichtereinrichtung 8 und eine nachfolgende hochdruckseitige, im Wärmetausch zwischen dem inneren Wärmetauschfluid und Umgebungsluft stehende Wärmetauscheinrichtung 10 für das innere Wärmetauschfluid des Kreislaufs. Diese hochdruckseitige Wärmetauscheinrichtung 10 ist dann über eine ausgangsseitig folgende Anschlußleitung 12 an die Eingangsseite der Expansionseinrichtung 4 zurückgeführt.

Die hochdruckseitige Wärmetauscheinrichtung 10 ist bei unterkritischem Betrieb ein Verflüssiger und bei überkritischem Betrieb ein Gaskühler.

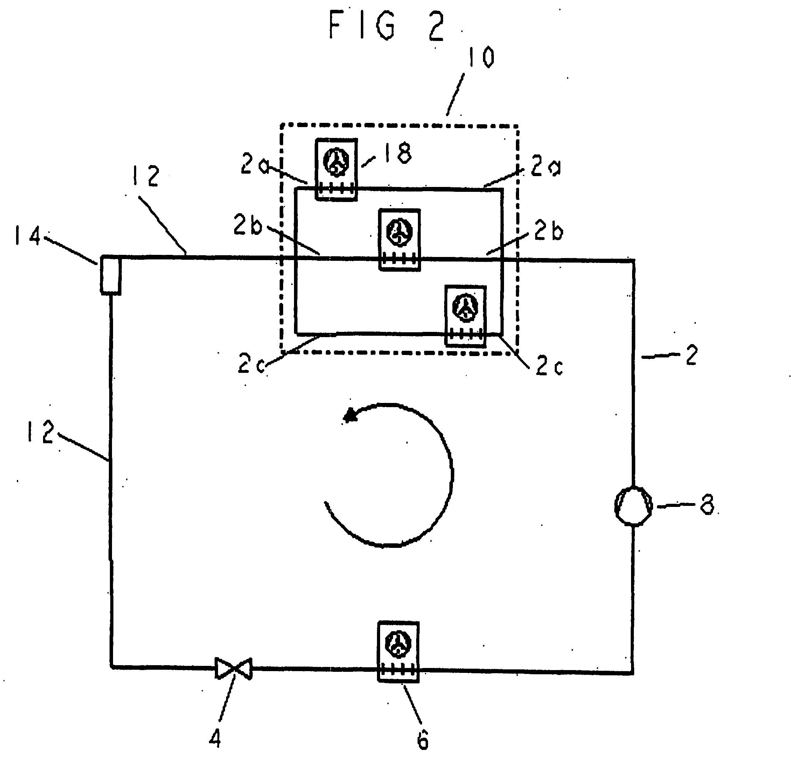

Es ist dabei konventionell, bei dem unterkritischen Betrieb gemäß Figur 2 eine hochdruckseitige Sammlereinrichtung 14 in Kreislaufrichtung zwischen dem Ausgang des Verflüssigers 10 und dem Eingang der Expansionseinrichtung 4, also innerhalb der Anschlußleitung 12, zwischen zu schalten.

Man kann aber auch eine niederdruckseitige Sammlereinrichtung 16 vorsehen; dies ist sowohl bei unterkritischer als auch bei überkritischer Betriebsweise möglich.

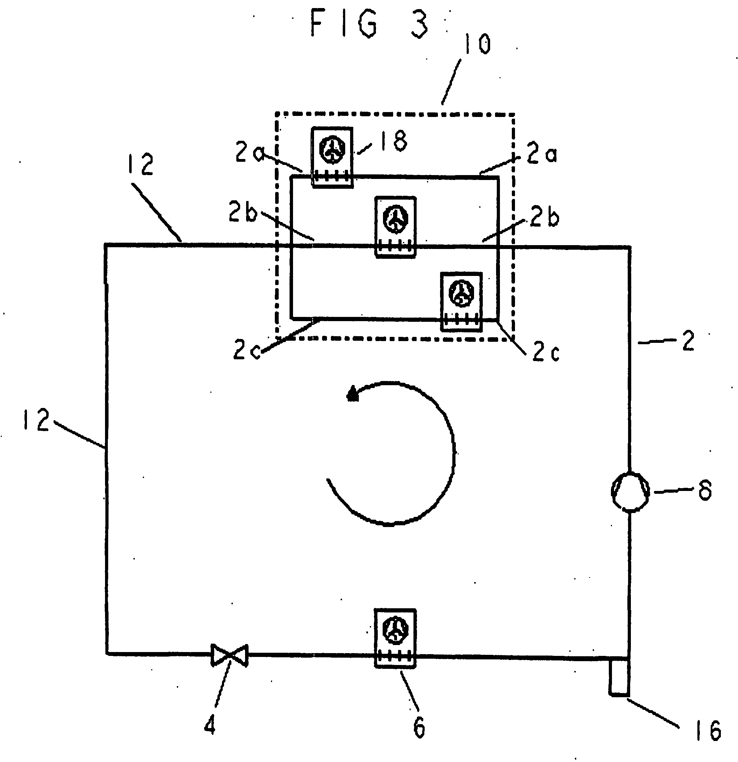

Bei der Anordnung der Figuren 1, 2 und 3 ist die hochdruckseitige Wärmetauscheinrichtung von mehreren, hier ohne Beschränkung der Allgemeinheit drei, Modulen 18 gebildet, die gemäß den drei parallelen Wegen 2a, 2b und 2c des Kreislaufs 2 parallel zueinander im geschlossenen Kreislauf des inneren Wärmetauschfluids geschaltet sind. Die Anzahl dieser Module ist allgemein n = 1, 2, 3, etc.. Der eigentliche Effekt der Erfindung einer Zusammensetzung eines leistungsstarken Wärmetauschers aus normierten Modulen kleinerer Leistung ist anschaulich erst ab n = 2 und höher. Wenn jedoch aus demselben Baukasten auch ein einzelnes Modul eingesetzt wird, und dieses nicht gesondert für die Schaltung gefertigt wird, wird dies auch noch als innerhalb der Erfindung liegend angesehen.

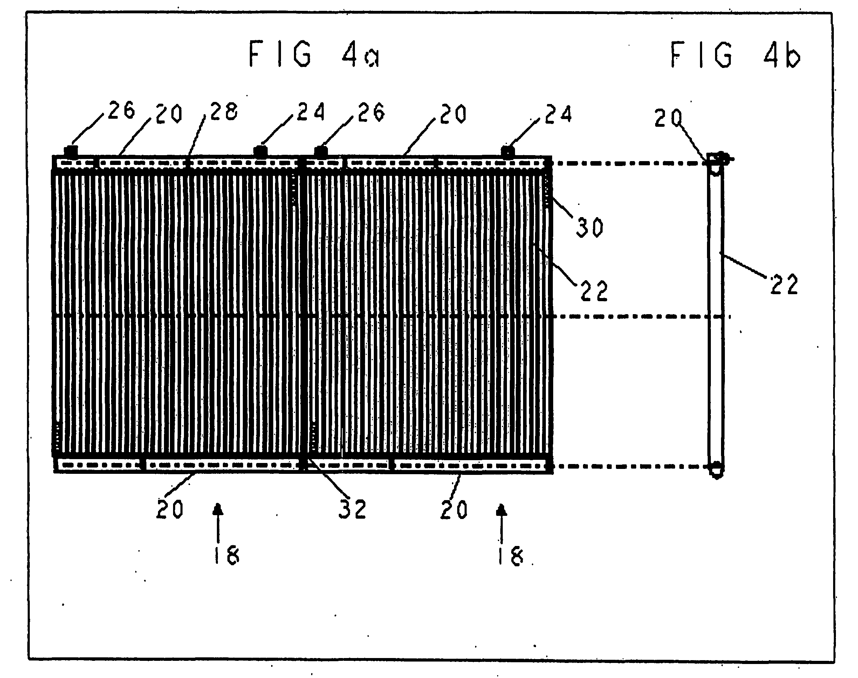

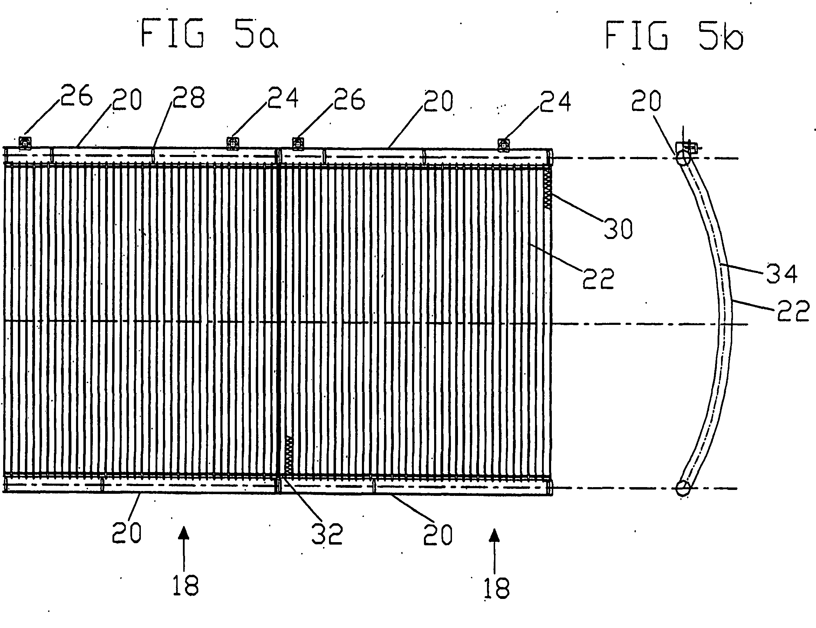

In den Figuren 4 und 5 wird für n = 2 die tatsächliche Bauweise und Zusammensetzung der Module 18 mehr im einzelnen beschrieben. Dabei sind Figur 4a und 5a identisch; der Unterschied liegt jeweils in den Figuren 4b und 5b.

Jedes Modul 18 hat eine Sammlereinrichtung in Gestalt von zwei achsparallelen Sammelrohren 20, zwischen denen sich Flachrohre 22 erstrecken. Das eine, in der Zeichnung obere, Sammelrohr 20 hat jeweils einen Eintritt 24 und einen Austritt 26, welche zweien der Strömungswege 2a, 2a bzw. 2b, 2b gemäß Figur 1 bis 3 entsprechen. Alternativ könnte der Austritt auch an dem anderen, in der Zeichnung unteren Sammelrohr angeordnet sein. Dieses könnte gegebenenfalls aber auch bei der gezeichneten Anschlußweise des oberen Sammelrohres zu einer Umlenkeinrichtung beliebiger Bauart degeneriert sein, je nachdem, mit wieviel Fluten die zwischen den beiden Sammelrohren 20 angeordneten Flachrohre 22 beaufschlagt werden. Die Aufteilung der Fluten erfolgt in der dargestellten Weise durch die Trennwände 28 in den Sammelrohren.

In jedem Modul 18 haben die parallel zueinander und rechtwinkelig zu den Sammelrohren 20 verlaufenden Flachrohre 22 eine gemeinsame Verrippung 30, etwa durch eingeschachtelte ZickZack-Lamellen. Die Verrippungen sind jedoch jeweils nur einem Modul 18 eigen und erstrecken sich insbesondere nicht von einem Modul zum anderen. Vielmehr ist jedes Modul für sich eine eigene Baueinheit. Die Trennlinie 32 gibt daher eine tatsächliche materielle Trennlinie zwischen benachbarten Modulen 18 wieder.

Die Flachrohre 22, ihre Verrippung 30 sowie die Sammelrohre 20 und gegebenenfalls anschließende Elemente, die weiter unten beschrieben werden, bestehen zweckmäßig aus Aluminium oder einer Aluminiumlegierung.

In Figur 4b ist zu erkennen, daß im Normalfall die Flachrohre 22 geradlinig zwischen den beiden Sammelrohren 20 verlaufen.

In der Variante von Figur 5b beschreibt statt dessen das einzelne Flachrohr 22 eine gekrümmte Linie entsprechend dem als Phantomlinie eingezeichneten Kreisbogenstück 34, dessen Krümmung um die Biegeachse 36 verläuft, unter deren Verwendung auch die Krümmung der Flachrohre 22 mitsamt deren Verrippung 30 bei der Herstellung leicht gewonnen werden kann. Man erkennt, daß bei dieser Krümmung der Anschluß der Flachrohre 22 an die Sammelrohre 18 geneigt verläuft.

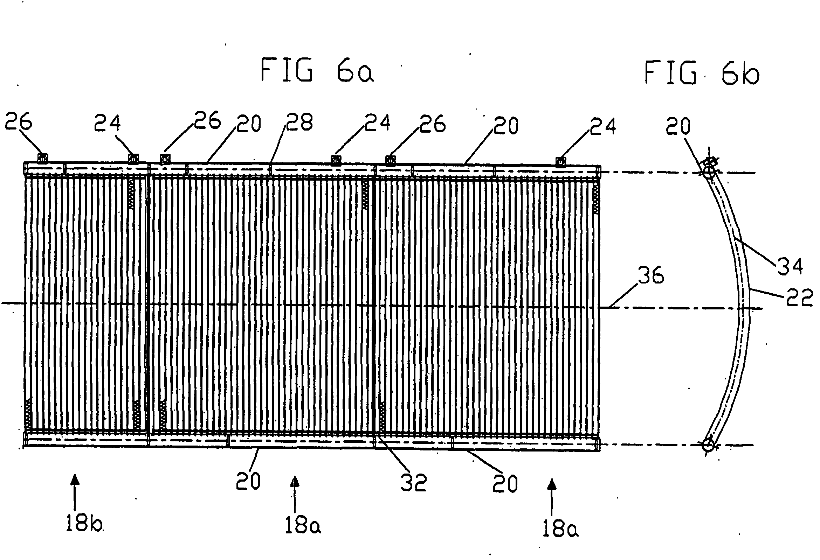

In Figur 6 entspricht Figur 6b der beschriebenen Figur 5b von Figur 5.

Figur 6a ist im Vergleich zu Figur 5a noch durch das Modul 18b ergänzt, welches in axialer Verlängerung an die beiden Module 18a anschließt.

Das Modul 18b kann wiederum in beliebiger Anzahl von n = 1 (wie hier gezeigt) bis N = 2, 3, 4, etc. vorhanden sein. Es gehört jedoch zu einer anderen Serie als die Module 18a. Bei der gezeigten Dimensionierung des Moduls 18b im Vergleich zu Modul 18a ist bei dem Modul 18b die Nennleistung etwa halb so groß, während, jedenfalls im theoretischen Idealfall, der aufgrund der Parallelschaltung vorliegende Druckabfall in allen Modulen etwa gleich bleibt. Durch praktische Betriebsverhältnisse kann es dabei zu Abweichungen kommen.

An den Figuren 5 und 6 wird darüber hinaus deutlich, daß die Module nur schaltungsmäßig bezüglich des inneren Wärmetauschfluids parallel geschaltet sind, während sie geometrisch hintereinander angeordnet sind, wobei die Hintereinanderordnung durch die Achsrichtung der Sammelrohre 20 definiert ist. Diese sind dabei aber nicht bei verschiedenen Modulen durchlaufend, sondern endseitig abgeschlossen, auch im Bereich der Trennlinie oder Trennfuge 32.

In einer denkbaren Modifikation könnte man auch die Module im wesentlichen nur durch die Flachrohre 22 und ihre Verrippung 30 definieren und bei einer Herstellung, bei der schließlich ein nicht lösbarer integraler Aufbau gewonnen wird, durchlaufende Sammelrohre 20 einsetzen und in diesen in gewünschten Rhythmus die Trennwände 28 einsetzen.

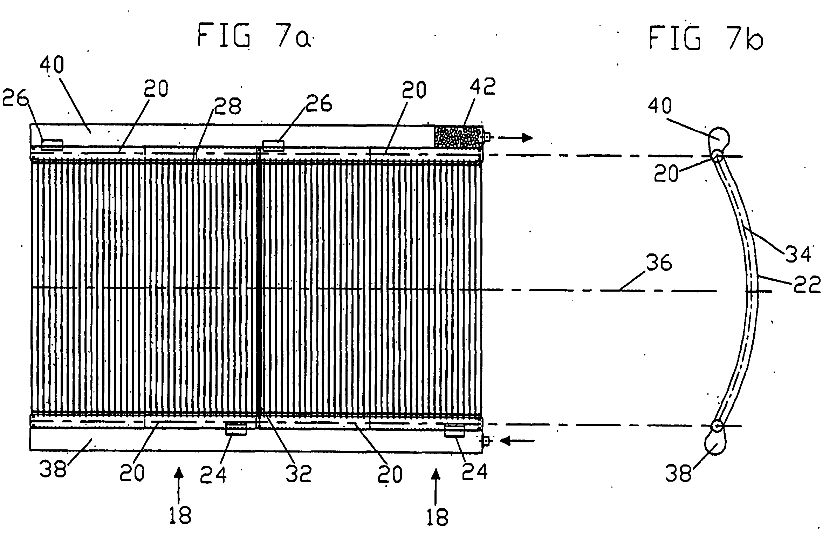

Die Anordnung von Figur 7 bildet die grundsätzliche Bauweise gemäß Figur 5 in folgender Hinsicht weiter:

Zunächst ist von der Modifikation ausgegangen, daß die Eintritte 24 und die Austritte 26 an verschiedenen Sammelrohren 20 vorgesehen sind, wie oben bisher ohne zeichnerische Darstellung als mögliche Modifikation erwähnt wurde.

Ferner ist eingangsseitig, also im Bereich der Eintritte 24, jeweils eine eingangsseitige Anschlußverzweigung 38 und ausgangsseitig im Anschluß an die Austritte 26 jeweils eine ausgangsseitige Anschlußverzweigung 40 vorgesehen, die jeweils an ihrer zeichnerisch rechten Stirnseite eingangsseitig und ausgangsseitig in den Kreislauf 2 eingebunden sind. Die beiden Anschlußverzweigungen 38 und 40 ersetzen dabei die parallelen Leitungswege 2a, 2b und 2c in den Figuren 1 bis 3.

Die Anschlußverzweigungen 38 und 40 und gegebenenfalls auch die Sammelrohre 20 können jeweils Strangpreßprofile sein, wiederum zweckmäßig aus Aluminium oder einer Aluminiumlegierung.

Ausgangsseitig ist in der Ausgangsseitigen Anschlußverzweigung 40 eine Filtereinrichtung 42 zur Filterung des inneren Wärmetauschfluids eingebaut.

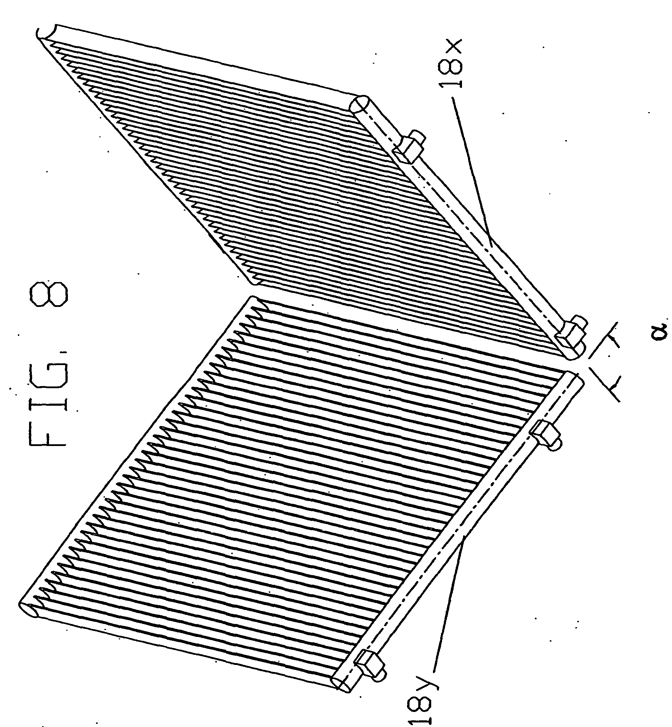

Bei allen hier beschriebenen Ausführungsformen sind aufeinander folgende Module jeweils in Achsrichtung ihrer Sammelrohre geometrisch hintereinander angeordnet. Figur 8 zeigt, daß zwei aneinander angrenzende Module 18x und 18y, die aus der gleichen Bauserie stammen oder verschiedenen Bauserien angehören oder im Grenzfall gar einer Sonderbauform angehören können (siehe Beschreibung weiter unten), unter einem vorzugsweise stumpfen Winkel α relativ zueinander angeordnet sein können. Dies ermöglicht ebenso wie die gekrümmte Bauweise einzelner Module die Gewinnung von Raum für andere Bauelemente, wie beispielsweise ein Axialgebläse in einem Dachaufsatz, wie auch später noch beschrieben wird.

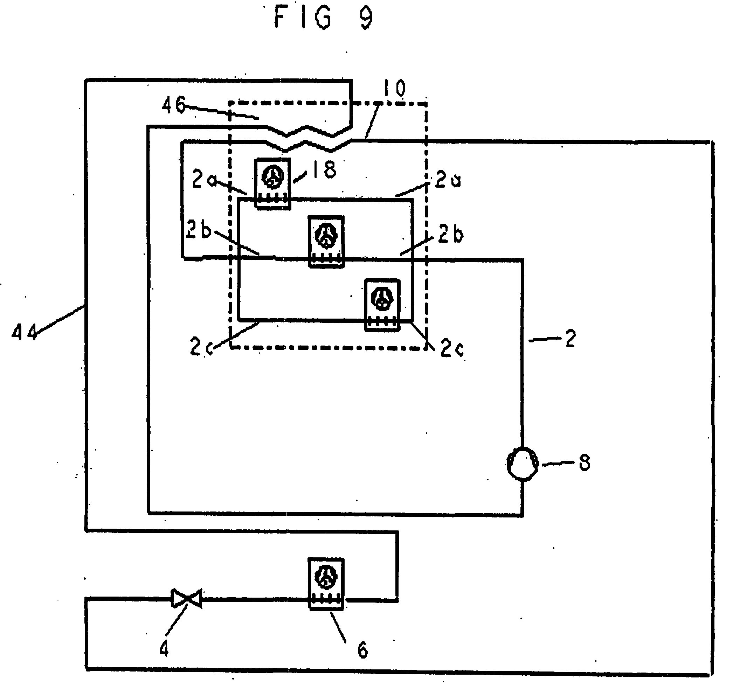

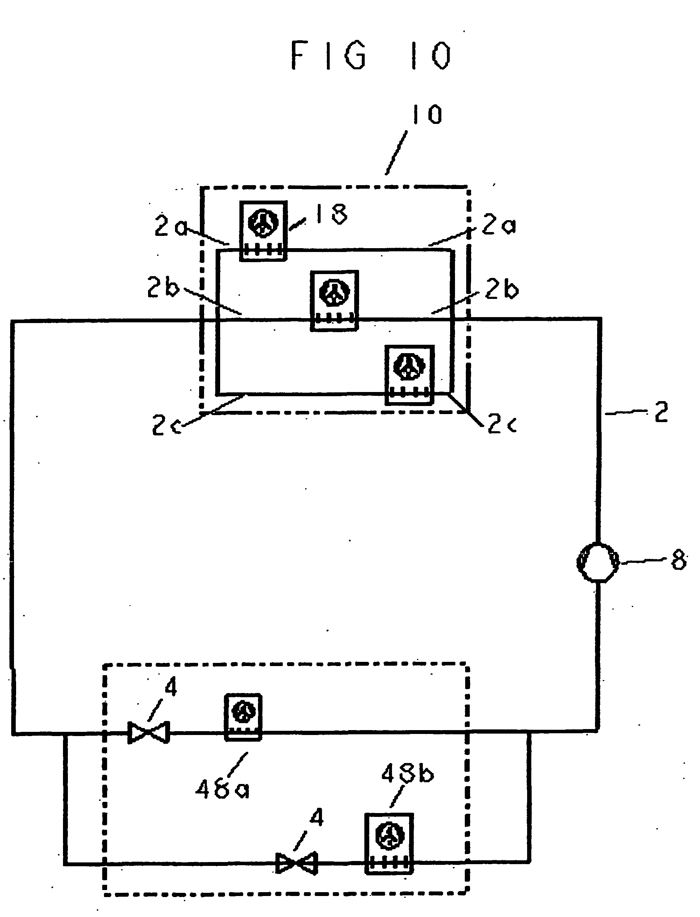

Die Figuren 9 und 10 zeigen zwei anordnungsmäßige Varianten wiederum von der Basisanordnung gemäß Figur 1.

In Figur 9 beschreibt der geschlossene Kreislauf 2 über eine bestimmte Wegstrecke einen zusätzlichen Weg 44, welcher im Bereich der hochdruckseitigen Wärmetauscheinrichtung 10 außer durch die Module 18 (n = 3) auch noch durch einen Gegenstromwärmetauscher 46 geführt ist, bei dem sowohl das innere als auch das äußere Wärmetauschfluid dem inneren Wärmetauschfluid der zuvor beschriebenen Wärmetauscher im Kreislauf 2 entspricht. Dabei erfolgt im Gegenstromwärmetauscher 46 ein Wärmetausch zwischen der Hochdruckseite und der Niederdruckseite des inneren Wärmetauschfluids. Deswegen ist bei dem Gegenstromwärmetauscher 46 auch nicht die Verrippung 30 erforderlich, welche sonst regelmäßig mit Umgebungsluft im Wärmetausch steht.

Der Gegenstromwärmetauscher hat somit eine eigenständige Bauform, die auch nicht zwingend Flachrohre erfordert, sondern im allgemeinen mit Rundungen auskommen kann. Trotzdem kann man ihn äußerlich so gestalten, daß er in den modularen Zusammenbau der Module 18 mit einbezogen sein kann.

In Figur 10 ist zunächst gezeigt, daß die Verdampfungseinrichtung 6 in wenigstens zwei verschiedene Verdampfer bzw. wiederum partielle Verdampfungseinrichtungen 48 aufgeteilt sein kann, die verschiedenen Klimatisierungszonen im Fahrzeug zugeordnet sind und dementsprechend auch verschieden groß in ihrer Nennleistung dimensioniert werden können. Man erkennt im Zeichnungsbild der Figur 10, daß diese beiden Verdampfer parallel im Kreislauf 2 des inneren Wärmetauschfluids einbezogen sind.

Ferner ist in Figur 10 ohne Beschränkung der Allgemeinheit jedem der beiden Verdampfer 48a und 48b eine eigene Expansionseinrichtung 4 zugeordnet.

In Figur 10 ist ferner zu erkennen, daß die beiden Verdampfer 48 nennleistungsmäßig verschieden stark dimensioniert sein sollen.

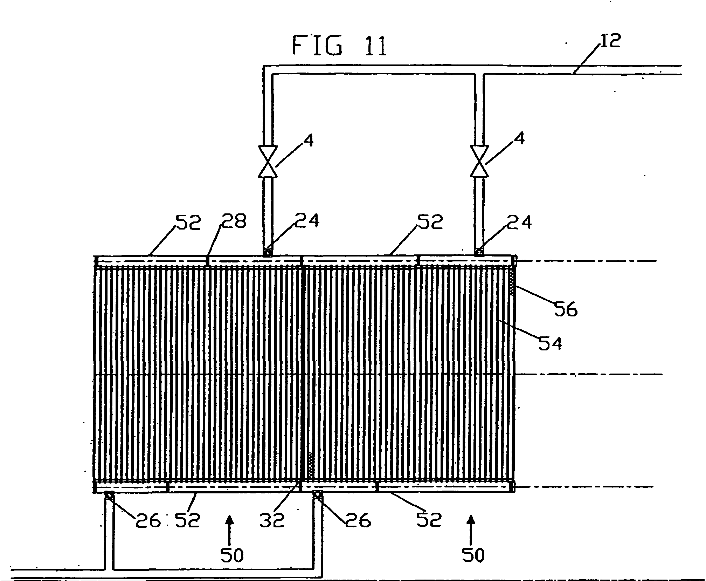

Figur 11 zeigt, daß dabei mindestens der nennleistungsmäßig größere Verdampfer 38b aus mindestens zwei bauartgleichen Verdampfermodulen 50 bestehen kann, wenn dies aus ähnlichen Gründen wie bei der vorhergehenden Betrachtung der Module 18 erwünscht ist. Man kann dabei im Grenzfall sogar den Verdampfer 48a aus demselben Baukasten der Verdampfermodule 50 nehmen.

Gemäß Figur 11 ist hier ohne Beschränkung der Allgemeinheit jedes Verdampfermodul 50 aus zwei parallelen Sammelrohren 52 aufgebaut, zwischen denen hier im allgemeinen runde oder ovale Rohre 54 mit einer äußeren Verrippung 56 verlaufen, die jeweils nur jedem Verdampfermodul 50 für sich allein zugehörig ist.

Die beiden Verdampfermodule 50 sind hier wie im Falle der Module 18 gemäß Figur 4 bis 7 geometrisch axial hintereinander angeordnet, wobei die geometrische Hintereinanderordnung durch die Achsrichtung der Sammelrohre 52 bestimmt ist. Diese Sammelrohre haben hier wiederum jede für sich einen Eintritt 58 und einen Austritt 60, über die die Verdampfermodule 50 bezüglich des inneren Wärmetauschfluids parallel miteinander verschaltet sind.

Auch hier können die verrippten Rohre sowie die Sammelrohre aus Aluminium oder einer Aluminiumlegierung bestehen und die Sammelrohre Strangpreßprofile sein. Alle weiteren Weiterbildungen, die in Bezug auf die Module der hochdruckseitigen Wärmetauscheinrichtung beschrieben wurden, sind grundsätzlich bezüglich der Verdampfermodule 50 ebenso möglich. Das gilt insbesondere bezüglich der Zusammensetzbarkeit aus Modulen verschiedener Serien, der Ergänzbarkeit durch Sonderausführungen von Modulen und der verschiedenen Anschlußarten.

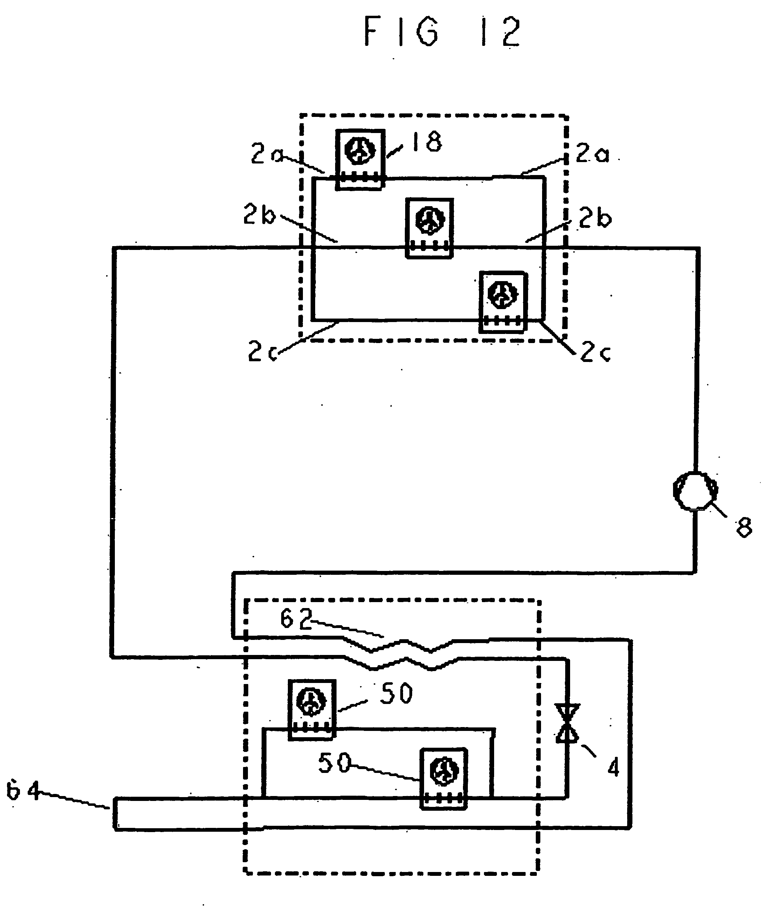

Anhand von Figur 12 wird ferner gezeigt, daß auch noch andersartige Varianten als die bisher beschriebenen möglich sind, welche in das Grundkonzept der Erfindung passen.

Analog zu Figur 1 wird wiederum davon ausgegangen, daß die hochdruckseitige Wärmetauschereinrichtung 10 aus den beispielsweise gewählten drei Modulen 18 besteht.

Ferner wird von zwei Verdampfermodulen 50 ausgegangen, die ebenso wie die Module 18 im Kreislauf 2 des inneren Wärmetauschfluids parallel geschaltet sind und bedarfsweise geometrisch hintereinander angeordnet sein können, wie dies anhand von Figur 11 erläutert ist.

Die Anzahlen der Module bzw. Verdampfermodule können dabei grundsätzlich zur Beschreibung des folgenden von n = 1, 2 bis höher variiert sein.

Die hier dargestellte Besonderheit besteht darin, daß der Gegenstromwärmetauscher 46 von Figur 9 nicht im hochdruckseitigen Ast des Kreislaufs 2 wie in Figur 9, sondern auf der Niederdruckseite des Kreislaufs 2 angeordnet ist, und zwar als Gegenstromwärmetauscher 62, der insoweit auch auf einem gesonderten Weg 64 des Kreislaufs 2 angeordnet ist. Trotz der eigenständigen Bauart dieses Gegenstromwärmetauschers kann er doch in der äußeren Gestaltung wiederum modulartig als gesonderte Baueinheit vorbereitet sein und so sogar eine Mischform von Zusammenschaltungen von Modulen ermöglichen, hier des Gegenstromwärmetauschers 62 mit den Verdampfermodulen 50.

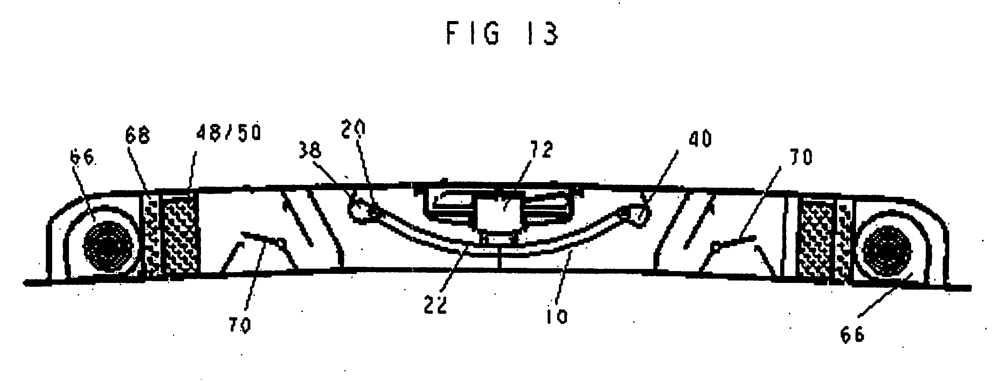

Figur 13 schließlich zeigt die günstige Anordnungsmöglichkeit der erfindungsgemäßen Anordnung insbesondere in einem Dachaufsatz eines Fahrzeugs, zum Beispiel Omnibusses oder größeren Nutzfahrzeugs.

Wie bei den eingangs erörterten bekannten Dachaufsätzen ist im großen eine zur Mittelachse symmetrische Aufbauart so vorgesehen, daß ein Fahrgastraum oder ein entsprechender großer Nutzraum des Fahrzeugs an den beiden Seitenwänden des Fahrzeugs mit Klimatisierungsluft beaufschlagt werden kann.

Hierzu sind im Anschluß an nicht dargestellte links- und rechtsseitige Dachkanale des Fahrzeugs links und rechts im Dachaufsatz Anschlußräume vorgesehen, in denen jeweils mindestens ein die Klimatisierungsluft ins Fahrzeug förderndes Radialgebläse 66 angeordnet ist. Diesem ist strömungsmäßig folgendes vorgeschaltet, was sich in der zeichnerischen Darstellung von Figur 13 von radial außen nach radial innen ergibt: ein Heizungswärmetauscher 68, ein Verdampfer 48 bzw. Verdampfermodul 50, eine Expansionseinrichtung 4 sowie eine Außenluft-Umluft-Klappe 70 für den wahlweisen oder gemischten Betrieb mit Ansaugung von Außenluft bzw. Umwälzung von Umluft. Die entsprechenden Anschlußschächte bedürfen hier keiner näheren Erläuterung, da diese konventionell und weit verbreitet sind.

Von Interesse im Rahmen der Erfindung ist, daß die hochdruckseitige Wärmetauschereinrichtung 10 mindestens ein Modul 18, vorzugsweise eine Hintereinanderanordnung derartiger Module, aufweist, welche gemäß Figur 5b, 6b und 7b gekrümmte Flachrohre 22 aufweist, die parallel zueinander in Längsrichtung des Dachaufsatzes verlaufende Sammelrohre 20 an ihren beiden Enden haben. Es ist dabei eine beliebige Anzahl von Modulen 18 von n = 1 an aufwärts möglich, die senkrecht zur Zeichnungsebene von Figur 13 geometrisch hintereinander angeordnet sein können.

Durch die Krümmung der Flachrohre 22 konvex nach unten entsteht nach oben hin eine ausgedehnte konkave Bucht. Dies ermögicht ohne große vertikale Erstreckung des Dachaufsatzes die Aufnahme eines Axiallüfters 72 oder einer Mehrzahl davon. Dies ermöglicht einen unüblich gedrungenen und insbesondere in der Höhe reduzierten Aufbau des Dachaufsatzes.

Bedarfsweise kann man, wie schon angesprochen, auch mehrere Verdampfermodule 50 an jeder Seite des Dachaufbaus vorsehen, die gemäß Figur 11 gestaltet, angeordnet und verschaltet werden können.

## Patentansprüche

1. Anordnung zum Klimatisieren eines Fahrzeugs, wobei die Anordnung einen Kreislauf (2) eines inneren Wärmetauschfluids mit einer zwischen der Hochdruckseite und der Niederdruckseite des Kreislaufes angeordneten Expansionseinrichtung (4), einer nachfolgenden Verdampfereinrichtung (6), einer nachfolgenden Verdichtereinrichtung (8) und einer nachfolgenden hochdruckseitigen, im Wärmetausch zwischen dem inneren Wärmetauschfluid und Umgebungsluft stehenden, Wärmetauschereinrichtung (10) für das innere Wärmetauschfluid des Kreislaufs und einer von der hochdruckseitigen Wärmetauscheinrichtung (10) ausgangsseitig folgenden Anschlußleitung (12) an die Eingangsseite der Expansionseinrichtung (4) aufweist,
wobei die hochdruckseitige Wärmetauschereinrichtung (10) einen modularen Aufbau aufweist, bei dem eine beliebige Anzahl n (n=1, 2, 3, etc.) in Nennleistung und Druckverlust gleicher Module (18) kreislaufmäßig parallel schaltbar ist,
**dadurch gekennzeichnet,**
**daß** die hochdruckseitige Wärmetauschereinrichtung (10) in einer verrippten Flachrohrbauweise ausgebildet ist, bei der verrippte (30) Flachrohre (22) mit mindestens einer Sammlereinrichtung (20) kommunizieren, welche die geometrische Längserstreckungsrichtung innerhalb der Wärmetauschereinrichtung (10) beschreibt, und wobei die Module (18)
in Bezug auf ihre jeweilige geometrische Längserstreckung hintereinander schaltbar sind und jedes dieser Module (18) eine der Bauart nach selbständige Wärmetauschereinheit mit Flachrohren (22) ist, deren Verrippung (30) jeweils nur dem betreffenden Modul (18) zugehörig ist.

2. Anordnung nach Anspruch 1, **dadurch gekennzeichnet, daß** bei der kreislaufmäßig parallelen Schaltung von mindestens zwei Modulen (18) deren Sammlereinrichtungen (20) axial fluchtend angeordnet sind.

3. Anordnung nach Anspruch 1 oder 2, **dadurch gekennzeichnet, daß** die geometrische Längserstreckungsrichtung innerhalb der Wärmetauschereinrichtung (10) längs des Fahrzeugs ausgerichtet ist.

4. Anordnung nach Anspruch 1, **dadurch gekennzeichnet, daß** bei der kreislaufmäßig parallelen Schaltung von mindestens zwei Modulen (18) deren Sammlereinrichtungen (20) unter einem Winkel zueinander angeordnet sind.

5. Anordnung nach Anspruch 4, **dadurch gekennzeichnet, daß** die geometrische Längserstreckungsrichtung innerhalb der Wärmetauschereinrichtung (10) quer zum Fahrzeug ausgerichtet ist.

6. Anordnung nach einem der Ansprüche 1 bis 5, **dadurch gekennzeichnet, daß** bei überkritischer Auslegung des Kreislaufs (2) die Wärmetauschereinrichtung (10) ein Gaskühler ist, und daß eine Sammlereinrichtung (16) in der Niederdruckseite des Kreislaufs (2) einbezogen ist.

7. Anordnung nach einem der Ansprüche 1 bis 5, **dadurch gekennzeichnet, daß** bei unterkritischer Auslegung des Kreislaufs (2) die Wärmetauschereinrichtung (10) eine Verflüssigereinrichtung ist und daß eine Sammlereinrichtung (14) in der Hochdruckseite und/oder der Niederdruckseite des Kreislaufs (2) einbezogen ist.

8. Anordnung nach einem der Ansprüche 1 bis 7, **dadurch gekennzeichnet, daß** die Wärmetauschereinrichtung (10) nur die beliebige Anzahl n (n=1, 2, 3, etc.) der in Nennleistung und Druckverlust gleichen Module (18) aufweist.

9. Anordnung nach einem der Ansprüche 1 bis 7, **dadurch gekennzeichnet, daß** die Wärmetauschereinrichtung (10) mindestens zwei Sätze von jeweils in beliebiger Anzahl n1, n2 etc., (n1 bzw. n2 etc. jeweils gleich 1, 2, 3) in Nennleistung und Druckverlust untereinander bauartgleichen Modulen (18a,18b) aufweist, wobei jedoch in verschiedenen Sätzen mindestens die Nennleistung unterschiedlich ist.

10. Anordnung nach einem der Ansprüche 1 bis 9, **dadurch gekennzeichnet, daß** mehrere in Bezug auf ihre jeweilige geometrische Längserstreckung hintereinander angeordnete Module (18) in der Wärmetauschereinrichtung (10) dauerhaft integriert sind.

11. Anordnung nach einem der Ansprüche 1 bis 10, **dadurch gekennzeichnet, daß** mehrere in Bezug auf ihre jeweilige geometrische Längserstreckung hintereinander angeordnete Module (18) in der Wärmetauschereinrichtung (10) lösbar eingebaut sind.

12. Anordnung nach Anspruch 10 oder 11, **dadurch gekennzeichnet, daß** die Module (18) jeweils eingangsseitig und/oder ausgangsseitig eine verteilende bzw. sammelnde Anschlußverzweigungen (38,40) haben.

13. Anordnung nach den Ansprüchen 10 und 11, **dadurch gekennzeichnet, daß** auch mindestens eine Anschlußverzweigung (38,40) in die dauerhafte Integrierung der Module (18) mit integriert ist.

14. Anordnung nach Anspruch 12 oder 13, **dadurch gekennzeichnet, daß** der Körper der Anschlußverzweigung (38,40) ein Strangpreßprofil ist.

15. Anordnung nach Anspruch 14, **dadurch gekennzeichnet, daß** für verteilende und für sammelnde Anschlußverzweigungen (38,40) dieselbe Bauform eines Strangpreßprofils verwendet ist.

16. Anordnung nach einem der Ansprüche 12 bis 15, **dadurch gekennzeichnet, daß** eine Filtereinrichtung (42) für das innere Wärmetauschfluid in einer sammelnden Anschlußverzweigung (40) einbezogen ist.

17. Anordnung nach einem der Ansprüche 1 bis 16, **dadurch gekennzeichnet, daß** die Bauart der Module (18) zueinander achsparallele Sammlereinrichtungen (20) aufweist, zwischen denen die Flachrohre (32) angeordnet sind, und daß der Verlauf der Flachrohre (32) zwischen den beiden Sammlereinrichtungen (20) jeweils längs einer gekrümmten Linie (34) erfolgt.

18. Anordnung nach Anspruch 17, **dadurch gekennzeichnet, daß** die gekrümmten Linien (34) eine mindestens einseitige Ausbuchtung mindestens eines Moduls (18) beschreiben.

19. Anordnung nach Anspruch 18, **dadurch gekennzeichnet, daß** die gekrümmten Linien (34) eine Biegeachse (36) haben.

20. Anordnung nach einem der Ansprüche 1 bis 19, **dadurch gekennzeichnet, daß** mindestens die hochdruckseitige Wärmetauscheinrichtung (10), die Verdampfereinrichtung (6) und die Expansionseinrichtung (4) in einem Dachaufsatz (Fig. 13) des Fahrzeugs angeordnet sind.

21. Anordnung nach einem der Ansprüche 1 bis 20, **dadurch gekennzeichnet, daß** die Verdampfereinrichtung (6) für verschiedene Klimatisierungszonen des Fahrzeugs, z.B. für einen Fahrerplatz einerseits und für einen Fahrgast- oder Nutzraum andererseits, gesonderte Verdampfer aufweist, die ihr jeweiliges inneres Wärmetauschfluid derselben hochdruckseitigen Wärmetauscheinrichtung (10) zuführen.

22. Anordnung nach einem der Ansprüche 1 bis 21 **dadurch gekennzeichnet, daß** die Verdampfereinrichtung (6) in einer Bauweise ausgebildet ist, bei der verrippte (56) Rohre (54) mit mindestens einer Sammlereinrichtung (52) kommunizieren, welche die geometrische Längserstreckungsrichtung innerhalb der Verdampfereinrichtung (6) beschreibt, und
daß die Verdampfereinrichtung einen modularen Aufbau aufweist, bei dem eine beliebige Anzahl n (n=1, 2, 3, etc.) in Nennleistung und Druckverlust gleicher Verdampfermodule (50) in Bezug auf ihre jeweilige geometrische Längserstreckung hintereinander, kreislaufmäßig aber parallel schaltbar ist und jedes dieser Verdampfermodule (50) eine der Bauart nach selbständige Verdampfereinheit mit Rohren (54) ist, deren Verrippung (56) jeweils nur dem betreffenden Verdampfermodul (50) zugehörig ist.

23. Anordnung nach den Ansprüchen 21 und 22, **dadurch gekennzeichnet, daß** der modulare Aufbau der Verdampfereinrichtung (6) für mindestens eine Klimatisierungszone des Fahrzeugs, z.B. für einen Fahrgast- oder Nutzraum, vorgesehen ist.

24. Anordnung nach Anspruch 23, **dadurch gekennzeichnet, daß** ein einzelnes weiteres in Nennleistung und Druckverlust gleiches Verdampfermodul (50) für eine weitere Klimazone, z.B. für einen Fahrerplatz, in dem modularen Aufbau mit einbezogen ist.

25. Anordnung nach einem der Ansprüche 22 bis 24, **dadurch gekennzeichnet, daß** mindestens ein Verdampfermodul (50) eine eigene Expansionseinrichtung (4) aufweist.

26. Anordnung nach Anspruch 25, **dadurch gekennzeichnet, daß** das Verdampfermodul (50) mit seiner eigenen Expansionseinrichtung (4) integriert aufgebaut ist.

27. Anordnung nach einem der Ansprüche 22 bis 26, **dadurch gekennzeichnet, daß** mehrere Verdampfermodule (50) mit einer gemeinsamen Expansionseinrichtung (4) kommunizieren.

28. Anordnung nach Anspruch 27, **dadurch gekennzeichnet, daß** eine Klimatisierungszone mindestens zwei Bereiche, bei einem Fahrgast- oder Nutzraum z.B. in Nachbarschaft der beiden Seitenwände, aufweist, und daß in mindestens zwei solchen Bereichen jeweils mehrere Verdampfermodule (50) mit einer gemeinsamen Expansionseinrichtung (4) kommunizieren.

29. Anordnung nach einem der Ansprüche 1 bis 28, **dadurch gekennzeichnet, daß** von mehreren Modulen (18) oder Verdampfermodulen (50) gleicher Leistung und gleichen Druckverlustes mindestens eines von innerem Wärmetauschfluid eines zusätzlichen Kreislaufs oder eines zusätzlichen Weges (64) desselben Kreislaufs (2) beaufschlagt ist.

30. Anordnung nach einem der Ansprüche 1 bis 29, **dadurch gekennzeichnet, daß** von verschiedenen Klimatisierungszonen im Fahrzeug, z.B. von einem Fahrerplatz einerseits und von einem Fahrgast- oder Nutzraum andererseits, herangeführte verbrauchte Klimatisierungsluftströme allein, in Mischung mit herangeführter Umgebungsluft oder alternierend mit herangeführter Umgebungsluft als äußeres Wärmetauschfluid mit derselben hochdruckseitigen Wärmetauscheinrichtung (10) in Wärmetausch treten.

31. Anordnung nach Anspruch 30, **dadurch gekennzeichnet, daß** das im zusätzlichen Weg (64) eingeschaltete Modul (18) bzw. Verdampfermodul (50) eine Gegenstromwärmetauscheinrichtung (62) zwischen hochdruckseitigem und niederdruckseitigem innerem Wärmetauschfluid ist.

## Claims

1. An arrangement for air conditioning a vehicle, wherein the arrangement has a circuit (2) of an inner heat exchange fluid with an expansion device (4) arranged between the high-pressure side and the low-pressure side of the circuit, a subsequent evaporator device (6), a subsequent compressor device (8) and a subsequent heat exchanger device (10) for the inner heat exchange fluid of the circuit, the heat exchanger device being at the high-pressure side and being in heat exchange relationship between the inner heat exchange fluid and ambient air, and a connecting line (12) to the inlet side of the expansion device (4), the connecting line following at the outlet side from the heat exchanger device (10) at the high-pressure side,
wherein the heat exchanger device (10) at the high-pressure side is of a modular structure in which any number n (n = 1, 2, 3, etc) of modules (18) identical in nominal output and pressure loss is connectable in parallel relationship in the circuit,
**characterised in that**
the heat exchanger device (10) at the high-pressure side is in the form of a ribbed flat pipe structure, wherein ribbed (30) flat pipes (22) communicate with at least one collector device (20) which describes the geometrical direction of longitudinal extension within the heat exchanger device (10), and wherein the modules (18) can be connected in succession in relation to their respective geometrical longitudinal extension and each of said modules (18) is a heat exchanger unit which is independent in accordance with type and has flat pipes (22) whose ribbing (30) is respectively associated only with the module (18) in question.

2. An arrangement according to claim 1 **characterised in that** when at least two modules (18) are connected in parallel relationship in a circuit the collector devices (20) thereof are arranged in axially aligned relationship.

3. An arrangement according to claim 1 or claim 2 **characterised in that** the geometrical direction of longitudinal extension within the heat exchanger device (10) is oriented lengthwise of the vehicle.

4. An arrangement according to claim 1 **characterised in that** when at least two modules (18) are connected in parallel relationship in a circuit the collector devices (20) thereof are arranged at an angle to each other.

5. An arrangement according to claim 4 **characterised in that** the geometrical direction of longitudinal extension within the heat exchanger device (10) is oriented transversely relative to the vehicle.

6. An arrangement according to one of claims 1 to 5 **characterised in that** in the case of a supercritical design of the circuit (2) the heat exchanger device (10) is a gas cooler and that a collector device (16) is incorporated in the low-pressure side of the circuit (2).

7. An arrangement according to one of claims 1 to 5 **characterised in that** in the case of a subcritical design of the circuit (2) the heat exchanger device (10) is a liquifier device and that a collector device (14) is incorporated in the high-pressure side and/or the low-pressure side of the circuit (2).

8. An arrangement according to one of claims 1 to 7 **characterised in that** the heat exchanger device (10) has only said any number n (n = 1, 2, 3 etc) of the modules (18) which are equal in nominal power and pressure loss.

9. An arrangement according to one of claims 1 to 7 **characterised in that** the heat exchanger device (10) has at least two sets of modules (18a, 18b) which are respectively of the same kind as each other in any number n1, n2, etc (n1 and n2 etc respectively equal to 1, 2, 3) in respect of nominal power and pressure loss, wherein however at least the nominal power is different in various sets.

10. An arrangement according to one of claims 1 to 9 **characterised in that** a plurality of modules (18) which are arranged in succession in relation to their respective geometrical longitudinal extension are permanently integrated in the heat exchanger device (10).

11. An arrangement according to one of claims 1 to 10 **characterised in that** a plurality of modules (18) which are arranged in succession in relation to their respective geometrical longitudinal extension are releasably fitted in the heat exchanger device (10).

12. An arrangement according to claim 10 or claim 11 **characterised in that** the modules (18) respectively have at the inlet side and/or outlet side a distributing and collecting connection branching (38, 40) respectively.

13. An arrangement according to claims 10 and 11 **characterised in that** at least one connection branching (38, 40) is also integrated into the permanent integration of the modules (18).

14. An arrangement according to claim 12 or claim 13 **characterised in that** the body of the connection branching (38, 40) is an extrusion.

15. An arrangement according to claim 14 **characterised in that** the same structural shape of an extrusion is used for distributing and for collecting connection branchings (38, 40).

16. An arrangement according to one of claims 12 to 15 **characterised in that** a filter device (42) for the inner heat exchange fluid is incorporated in a collecting connection branching (40).

17. An arrangement according to one of claims 1 to 16 **characterised in that** the kind of the modules (18) has collector devices (20) which are arranged in axis-parallel relationship with each other and between which the flat pipes (32) are arranged, and that the configuration of the flat pipes (32) between the two collector devices (20) occurs in each case along a respective curved line (34).

18. An arrangement according to claim 17 **characterised in that** the curved lines (34) describe an at least one-sided bulge configuration of at least one module (18).

19. An arrangement according to claim 18 **characterised in that** the curved lines (34) have a bending axis (36).

20. An arrangement according to one of claims 1 to 19 **characterised in that** at least the heat exchanger device (10) at the high-pressure side, the evaporator device (6) and the expansion device (4) are arranged in a roof mounting attachment (Figure 13) of the vehicle.

21. An arrangement according to one of claims 1 to 20 **characterised in that** the evaporator device (4) has separate evaporators for different air-conditioning zones of the vehicle, for example for a driving position on the one hand and for a passenger or utility space on the other hand, which evaporators feed their respective inner heat exchange fluid to the same heat exchanger device (10) at the high-pressure side.

22. An arrangement according to one of claims 1 to 21 **characterised in that** the evaporator device (6) is of a structure wherein ribbed (56) pipes (54) communicate with at least one collector device (52) which describes the geometrical direction of longitudinal extension within the evaporator device (6), and
the evaporator device is of a modular structure in which any number n (n = 1, 2, 3 etc) of evaporator modules (30) which are identical in nominal power and pressure loss is connectable in succession in relation to their respective geometrical longitudinal extension but in parallel relationship in the circuit and each of said evaporator modules (50) is an evaporator unit which is independent in accordance with type, with pipes (54) whose ribbing (56) is respectively associated only with the evaporator module (50) in question.

23. An arrangement according to claims 21 and 22 **characterised in that** the modular structure of the evaporator device (6) is provided for at least one air-conditioning zone of the vehicle, for example for a passenger or utility space.

24. An arrangement according to claim 23 **characterised in that** a single further evaporator module (50) which is identical in nominal power and pressure loss for a further air-conditioning zone, for example for a driving position, is incorporated in the modular structure.

25. An arrangement according to one of claims 22 to 24 **characterised in that** at least one evaporator module (50) has its own expansion device (4).

26. An arrangement according to claim 25 **characterised in that** the evaporator module (50) is constructed integrated with its own expansion device (4).

27. An arrangement according to one of claims 22 to 26 **characterised in that** a plurality of evaporator modules (50) communicate with a common expansion device (4).

28. An arrangement according to claim 27 **characterised in that** an air-conditioning zone has at least two regions, in a passenger or utility space, for example in the vicinity of the two side walls, and that in at least two such regions a respective plurality of evaporator modules (50) communicate with a common expansion device (4).

29. An arrangement according to one of claims 1 to 28 **characterised in that** of a plurality of modules (18) or evaporator modules (50) of identical power and identical pressure loss at least one is subjected to the action of inner heat exchange fluid of an additional circuit or an additional path (64) of the same circuit (2).

30. An arrangement according to one of claims 1 to 29 **characterised in that** used air-conditioning air flows which are supplied from various air-conditioning zones in the vehicle, for example from a driving position on the one hand and from a passenger or utility space on the other hand come into heat exchange relationship alone, mixed with supplied ambient air or alternately with supplied ambient air, as an outer heat exchange fluid, with the same heat exchanger device (10) at the high-pressure side.

31. An arrangement according to claim 30 **characterised in that** the module (18) or evaporator module (50) connected in the additional path (64) is a counter-flow heat exchanger device (62) between inner heat exchange fluid at the high-pressure side and the low-pressure side.

## Revendications

1. Dispositif de climatisation d'un véhicule, le dispostif présentant un circuit (2), d'un fluide d'échange thermique intérieur avec un dispositif d'expansion (4), disposé entre le côté haute pression et le côté basse pression du circuit, un dispositif évaporateur (6) installé en aval, un dispositif compresseur (8), installé en aval, et un dispositif échangeur de chaleur (10) situé côté haute pression, en aval, placé en échange thermique, entre le fluide d'échange thermique intérieur et l'air ambiant, pour le fluide thermique intérieur du circuit, et avec une conduite de raccordement (12) placée en aval, côté sortie, du dispositif échangeur de chaleur (10) situé côté haute pression, la conduite de raccordement étant placée du côté entrée du dispositif d'expansion (4), le dispositif échangeur de chaleur (10), côté haute pression, présentant une structure modulaire, pour laquelle un nombre n quelconque (n=1,2,3, etc.) de modules 18, à puissance nominale et à perte de pression identiques, sont susceptible d'être branchés en parallèle dans le circuit,
**caractérisé en ce que**
le dispositif échangeur de chaleur (10) situé côté haute pression est réalisé en un mode de construction à tube plat aileté ou nervuré, pour lequel les tubes plats nervurés (30) communiquent avec au moins un dispositif collecteur (20) suivant la direction d'étendue longitudinale géométrique à l'intérieur du dispositif échangeur de chaleur (10), et les modules (18) étant susceptibles d'être branchés les uns derrière les autres, en se référant à leur étendue longitudinale géométrique respective, et chacun de ces modèles (18) étant une unité échangeuse de chaleur, autonome, de par le type de construction, et munie de tubes plats (22) dont l'ailetage (30) ne concerne le module (18) concerné.

2. Dispositif selon la revendication 1, **caractérisé en ce que**, concernant le branchement parallèle des circuits d'au moins deux modules (18), leurs dispositifs collecteurs (20) sont disposés en alignement axial.

3. Dispositif selon la revendication 1 ou 2, **caractérisé en ce que** la direction d'étendue longitudinale géométrique à l'intérieur du dispositif échangeur de chaleur (10) est orientée dans la direction longitudinale du véhicule.

4. Dispositif selon la revendication 1, **caractérisé en ce que**, concernant le branchement parallèle des circuits d'au moins deux modules (18), leurs dispositifs collecteurs (20) sont disposés sous le même angle les uns par rapport aux autres.

5. Dispositif selon la revendication 4, **caractérisé en ce que** la direction d'étendue longitudinale géométrique, à l'intérieur du dispositif échangeur de chaleur (10), est orientée transversalement par rapport au véhicule.

6. Dispositif selon l'une des revendications 1 à 5, **caractérisé en ce que**, en cas de conception sur-critique du circuit (2), le dispositif échangeur de chaleur (10) est un refroidisseur à gaz, et **en ce qu'**un dispositif collecteur (16) est intégré dans le côté basse pression du circuit (2).

7. Dispositif selon l'une des revendications 1 à 5, **caractérisé en ce que**, en cas de conception sous-critique du circuit (2), le dispositif échangeur de chaleur (10) est un dispositif liquéfacteur, et **en ce qu'**un dispositif collecteur (14) est intégré dans le côté haute pression et/ou le côté basse pression du circuit (2).

8. Dispositif selon l'une des revendications 1 à 7, **caractérisé en ce que** le dispositif échangeur de chaleur (6) ne présente que le nombre n quelconque (n=1,2,3, etc.) des modules (18), dont la puissance nominale et la perte de pression sont identiques.

9. Dispositif selon l'une des revendications 1 à 7, **caractérisé en ce que** le dispositif échangeur de chaleur (10) présente au moins deux jeux, ayant chacun un nombre quelconque n1, n2, etc., (n1, n2, etc étant chacun égal à 1,2,3), de modules (18a,18b) de construction mutuellement identiques en terme de puissance nominale et de perte de charge, sachant que, cependant, au moins la puissance nominale est différente dans les différents jeux.

10. Dispositif selon l'une des revendications 1 à 9, **caractérisé en ce qu'**une pluralité de modules (18), disposés les uns derrière les autres en se référant à leur étendue longitudinale géométrique respective, sont intégrés de façon permanente dans le dispositif échangeur de chaleur (10).

11. Dispositif selon l'une des revendications 1 à 10, **caractérisé en ce qu'**une pluralité de modules (18), disposés les uns derrière les autres en se référant à leur étendue longitudinale géométrique respective, sont intégrés de façon amovible dans le dispositif échangeur de chaleur (10).

12. Dispositif selon la revendication 10 ou 11, **caractérisé en ce que** les modules (18) ont chacun, côté entrée et/ou côté sortie, une ramification de raccordement (38,40) ayant un effet distributeur ou collecteur.

13. Dispositif selon les revendications 10 et 11, **caractérisé en ce que**, sur au moins une ramification de raccordement (38,40), l'intégration permanente des modules (18) est intégrée conjointement.

14. Dispositif selon la revendication 12 ou 13, **caractérisé en ce que** le corps de la ramification de raccordement (38,40) est un profilé obtenu par extrusion.

15. Dispositif selon la revendication 14, **caractérisé en ce qu'**une forme de construction de profilé d'extrusion identique est utilisée pour les ramifications de raccordement (38,40) à effet de distribution et de collecte.

16. Dispositif selon l'une des revendications 12 à 15, **caractérisé en ce qu'**un dispositif de filtration (42) est intégré dans une ramification de raccordement (40) à effet de collecte, pour le fluide d'échange thermique interne.

17. Dispositif selon l'une des revendications 1 à 16, **caractérisé en ce que** le type de construction des modules (18) présente des dispositifs collecteurs (20) à axe mutuellement parallèle, entre lesquels dont disposés des tubes plats (32), et **en ce que** l'allure des tubes plats (32), entre les deux dispositifs collecteurs (20), suit chaque fois une ligne (34) incurvée.

18. Dispositif selon la revendication 17, **caractérisé en ce que** les lignes (34) incurvées suivent une courbure sortante, au moins sur un côté d'au moins un module (18).

19. Dispositif selon la revendication 10, **caractérisé en ce que** les lignes (34) incurvées ont un axe de courbure (36).

20. Dispositif selon l'une des revendications 1 à 19, **caractérisé en ce qu'**au moins le dispositif échangeur thermique (10), côté haute pression, le dispositif évaporateur (6) et le dispositif d'expansion (4), sont disposés dans une garniture de toit (Fig. 13) du véhicule.

21. Dispositif selon l'une des revendications 1 à 20, **caractérisé en ce que** le dispositif évaporateur (6) présente, pour des zones de climatisation différentes du véhicule, pour exemple pour une place de conducteur, d'une part, et pour un espace à passager ou utile, d'autre part, des évaporateurs séparés, qui amènent leur fluide d'échange thermique interne respectif au même dispositif échangeur de chaleur (10) situé côté haute pression.

22. Dispositif selon l'une des revendications 1 à 21, **caractérisé en ce que** le dispositif évaporateur (6) est réalisé en un mode construction pour lequel des tubes (54) nervurés (56) communiquent avec au moins un dispositif collecteur (52), suivant la direction d'étendue longitudinale géométrique à l'intérieur du dispositif évaporateur (6), et
**en ce que** le dispositif évaporateur présente une construction modulaire, pour laquelle un nombre n quelconque (n=1,2,3, etc.) de modules évaporateurs (50), identiques en terme de puissance nominale et de perte de pression, sont disposés les uns derrière les autres en se référant à leur direction longitudinale géométrique respective, mais sont cependant susceptibles d'être branchés en parallèle quant aux circuits, et chacun de ces modules évaporateurs (50) est une unité évaporatrice, autonome d'après le type de construction, dont l'ailetage (56) appartient à chaque fois uniquement au module évaporateur (50) concerné.

23. Dispositif selon les revendications 21 et 22, **caractérisé en ce que** la construction modulaire du dispositif évaporateur (6) est prévue pour au moins une zone de climatisation du véhicule, par exemple pour un habitacle ou un espace utile.

24. Dispositif selon la revendication 23, **caractérisé en ce qu'**un autre module évaporateur (50) individuel, identique en termes de puissance nominale et de perte de pression, est intégré dans la construction modulaire, pour traiter une autre zone de climatisation, par exemple pour une place de conducteur.

25. Dispositif selon l'une des revendications 22 à 24, **caractérisé en ce qu'**au moins un module évaporateur (50) présente un dispositif d'expansion (4) propre.

26. Dispositif selon la revendication 25, **caractérisé en ce que** le module évaporateur (50) est construit de façon à être intégré avec son dispositif d'expansion (4) propre.

27. Dispositif selon l'une des revendications 22 à 26, **caractérisé en ce** plusieurs modules évaporateurs (50) communiquent avec un dispositif d'expansion (4) commun.

28. Dispositif selon la revendication 27, **caractérisé en ce qu'**une zone de climatisation présente au moins deux zones, dans le cas d'un habitacle ou d'un espace utile, par exemple au voisinage des deux parois latérales, et **en ce que**, en au moins deux zones de ce type, chaque fois plusieurs modules évaporateurs (50) communiquent avec un dispositif d'expansion (4) commun.

29. Dispositif selon l'une des revendications 1 à 28, **caractérisé en ce que** de plusieurs modules (18) ou modules évaporateurs (50), de même puissance et de même perte de pression, au moins l'un est sollicité par un fluide d'échange thermique interne d'un circuit supplémentaire, ou d'un chemin (64) supplémentaire du même circuit (2).

30. Dispositif selon l'une des revendications 1 à 29, **caractérisé en ce que** des flux d'air de climatisation consommés, fournis par différentes zones de climatisation dans le véhicule, par exemple d'une place de conducteur, d'une part, et d'un habitacle ou d'un espace utile, d'autre part, sont placés en échange thermique avec le même dispositif d'échange thermique (10) côté haute pression, seuls, en mélange avec de l'air ambiant apporté, ou en alternance avec de l'air ambiant, apporté en tant que fluide d'échange thermique externe.

31. Dispositif selon la revendication 30, **caractérisé en ce que** le module (18) ou le module évaporateur (50), intégré dans le circuit du chemin (64) supplémentaire, est un dispositif échangeur de chaleur à contre-courant (62), entre le fluide d'échange thermique interne, côté haute pression et côté basse pression.
